# EUROPEAN PATENT APPLICATION

(11) **EP 0 913 113 A1**
(43) Date of publication of application: **06.05.1999**
(21) Application number: 97308786.9
(22) Date of filing: 31.10.1997
(51) Int. Cl.: A47J 37/12, G07F 9/10

(54) **Vending and product dispensing machine**

(71) Applicant: Tege Patents Aktiengesellschaft, 9497 Triesenberg (LI)
(72) Inventor: Drake, David, Letchworth, Herts (GB); Skingsley, John David, Letchworth, Herts (GB); Knowlton, Alan, Huntingdon, Cambs (GB); Newman, Michael John, Hunsdon, Ware, Herts (GB)
(74) Representative: Brunner, Michael John

(57) **Abstract**

A vending container filling mechanism has a container holder 80 for supporting a container 90. A guide 89 locates the container on the container holder and a product feed 89 directs elongate products, such as french fries into the container. A vibrating device 81-86 vibrates and rotates the container holder in order to increase the packing of the products in the container.

## Description

The present invention relates to dispensing a product from a vending machine and, more particularly, to dispensing a solid food product into a container for retrieval by the user. The invention is specifically aimed at dispensing a portion of a cooked food product into a cup or similar container.

In our co-pending European patent application numbers 97304257.5 and 97304258.3 we describe a vending machine for vending portions of potato chips (french fries), the french fries being produced by rehydrating and extruding powdered potato, cooking the extruded product in cooking oil and then dispensing the cooked product into a cup for vending to the customer.

As the fries as dispensed into the cup, due to the elongate and slightly irregular form and size of the individual french fries which are produced by the process, they are not uniformly orientated and therefore occupy cup volume significantly greater than the volume of the french fries themselves. Whilst this may be desirable to a certain extent, it also means that the cups into which the french fries are dispensed need to be somewhat larger than they could be if the french fries were more closely packed within the cups. This leads to a requirement for a larger vending location where the fries enter the cup or else, if the cup is reduced in size, may result in the cooked food product overflowing the sides of the cup. Either of these situations is disadvantageous, the first from the point of view of available space within the vending machine and increased cost and the second from the point of view of customer satisfaction.

We have found, however, that if the cup is vibrated as dispensing of the food product into the cup takes place, then a greater packing density can be achieved.

Accordingly, in a first aspect of the present invention there is provided a vending container filling mechanism comprising a container holder for supporting the container; a guide for locating the container on the container holder; a product feed for directing product into the container; and a vibrating device for vibrating the container holder.

Preferably, the vibrating device also causes the container holder to rotate. This improves packing of the product in the container.

The invention also includes a vending machine incorporating a container filling mechanism of the above type. According to a second aspect of the present invention in a method of vending a solid food product into a vending container, the vending container is vibrated and preferably rotated in order to consolidate the food product within the container to increase the packing density.

Preferably, the container holder is vibrated and caused to rotate by means of an eccentric drive disposed on the underside of the container holder, the eccentric drive being driven by the shaft of a motor.

Alternatively, however, the container holder may be driven by a magnetostrictive or electrostrictive transducer or other vibration generating device.

The term "container" is used above to include a cup, pot or similar enclosure into which a solid food product may be dispensed.

One example of a filling mechanism according to the present invention will now be described with reference to the accompanying drawings in which:
Figure 1 is a diagrammatic front view of a vending machine embodying the mechanism of the present invention; and
Figure 2 is a diagrammatic sectional view of a filling machine mechanism.

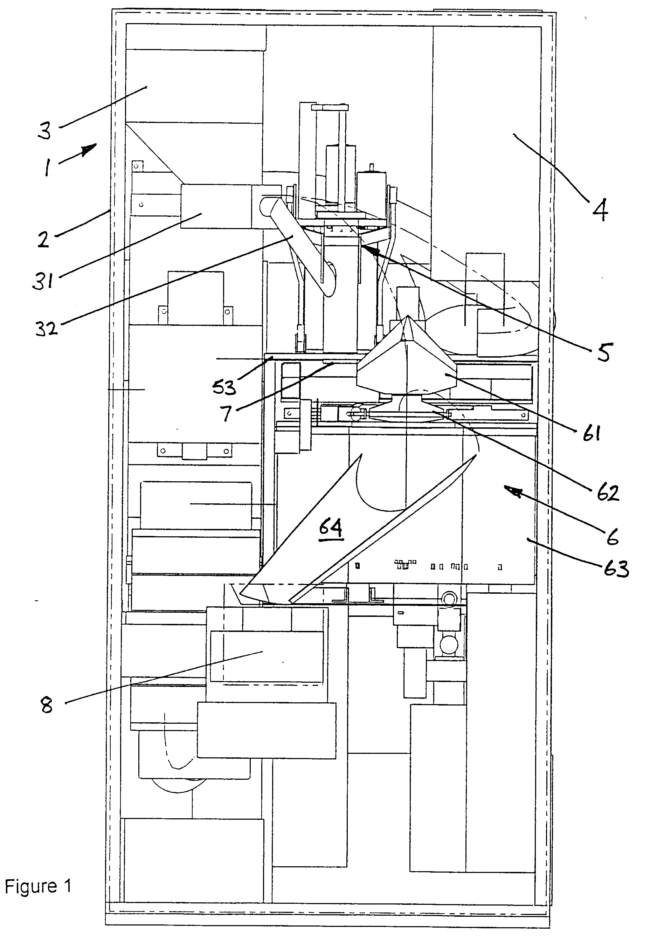

The catering machine 1 shown in Figure 1 is a vending machine designed for dispensing orders of potato chips (french fries) and includes a casing 2 within which all the operative components of the vending machine are disposed.

The vending machine includes a hopper 3 for containing a powdered potato product and a dispenser 4 of condiments such as tomato sauce in miniature pots or otherwise suitably packaged, and which are dispensed separately or with the chips. Water is fed from a mains supply. The powdered potato product is fed, via means of a auger system 31 and a chute 32, and water from the mains supply is fed via a suitable pressure and flow control mechanism, which includes a pump, flow and pressure regulators and flow control valves (none of which are shown), to a rehydration and extrusion apparatus 5 which will be described in more detail below. A sliding gate valve 7 supported under a support plate 53 closes off the bottom of the rehydration and extrusion apparatus.

From the rehydration and extrusion apparatus rehydrated potato mix is extruded into one of four cooking baskets 61 which form part of a cooking station 6 (see our co-pending European patent application number 97304258.3). The cooking station 6 includes a housing 63 in which is disposed a vessel providing a bath of cooking oil which is heated to the desired temperature by external heater bands (not shown). Individual portions of potato chips or french fries are extruded into the cooking baskets 61 for cooking within the oil bath. The individual baskets are rotated on a carrousel 62 and after having been cooked for the desired length of time the respective cooking basket is pivoted out of the cooking oil to deposit the portion of chips onto a delivery chute 64 from where it is dispensed at the front of the vending machine into cups provided from a cup supply mechanism (not shown) to a cup filling mechanism 8 and vended to the user.

The vending machine includes an air treatment system as described in our co-pending European patent application number 97304257.5 and which will not be further described in this specification as it forms no part of the present invention. Likewise, other components of the vending machine which are not necessary for a full understanding of the rehydration and extrusion apparatus of the present invention are not described in detail.

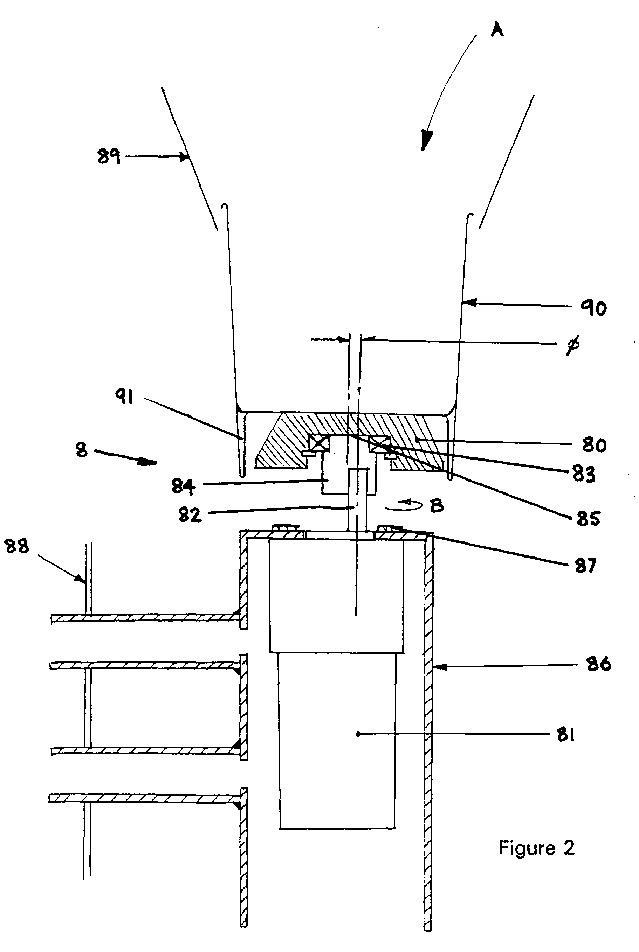

Figure 2 shows the container filling mechanism diagrammatically, but in more detail.

The cup filling mechanism 8 incorporates a cup holder 80 in the form of a platform which is able to move laterally and is so moved in use under the action of a motor 81 having a shaft 82 which mounts, eccentrically, a bearing 83 on a weight 84. The bearing 83 is mounted in a socket 85 in the underside of the holder 80. The motor is mounted on a support 86 by means of suitable bolts 87. The support 86 is in turn mounted on an internal frame element 88.

In use, a cup 90 is dispensed down a cup delivery chute (not shown) and through a guide collar 89 into position on the cup holder 80. The guide collar 89 serves to locate the cup so that, in use, fries which are dispensed also through the guide 89 in the direction of arrow A from the delivery chute 64 (Figure 1) are deposited into the cup 90.

In use, operation of the motor 81 rotates the shaft 82, as shown by the arrow B, which in turn, due to the eccentric offset φ causes the cup holder 80 to be shaken or vibrated. As the motor is operated, the cup holder 80 also rotates due to the friction in the bearing 83, but its rotation is limited by engagement of the cup 90 (sitting on the holder 80) with the lower edge of the guide 89. The motor is arranged to be operated as the fries or chips are dispensed and has the effect of consolidating the arrangement of the fries within the cup 90 or, in other words, increasing their packing density.

The collar 89 has an opening (not shown) at one side through which the cup can be removed in conventional fashion.

As shown, the cup 90 includes a downwardly protruding annular flange 91 at its base, but alternative forms of cup and cup holder may be provided.

## Claims

1. A vending container filling mechanism comprising a container holder for supporting the container; a guide for locating the container on the container holder; a product feed for directing product into the container; and a vibrating device for vibrating the container holder.

2. A mechanism according to claim 1, wherein the container holder comprises a platform which is laterally movable under the action of the vibration device.

3. A mechanism according to claim 1 or claim 2, wherein the container holder is caused to rotate.

4. A mechanism according to any of claims 1 to 3, wherein the container holder is vibrated by an eccentric drive mechanism driven by a motor.

5. A vending machine including a mechanism according to any of claims 1 to 4.

6. A method of vending a solid food product into a vending container wherein the vending container is vibrated in order to consolidate the food product within the container to increase the packing density.

7. A method according to claim 6, wherein the container holder is vibrated by an eccentric drive mechanism driven by a motor.

8. A method according to claim 6 or claim 7, wherein the container holder is caused to rotate.
